# EUROPEAN PATENT APPLICATION

(11) **EP 2 755 402 A1**
(43) Date of publication of application: **16.07.2014**
(21) Application number: 14150821.8
(22) Date of filing: 10.01.2014
(51) Int. Cl.: H04R 25/00, H04W 4/02

(54) **System and method for obtaining an audio stream based on proximity and direction**

(30) Priority: 10.01.2013 US 201313738775
(71) Applicant: Starkey Laboratories, Inc., Eden Prairie, MN 55344 (US)
(72) Inventor: Solum, Jeffrey P., Shorewood, MN Minnesota 55331 (US)
(74) Representative: UEXKÜLL & STOLBERG

(57) **Abstract**

Disclosed herein, among other things, are systems and methods for obtaining an audio stream for hearing assistance devices. One aspect of the present subject matter includes a method comprising sensing proximity of a wearer of a hearing assistance device, and sensing direction of movement of the wearer of the hearing assistance device. Audio streaming to the hearing assistance device is activated or deactivated based on the sensed proximity and direction of movement, according to various embodiments.

## Description

### TECHNICAL FIELD

This document relates generally to hearing assistance systems and more particularly to systems and methods for obtaining an audio stream based on proximity and direction.

### BACKGROUND

Modern hearing assistance devices, such as hearing aids, typically include digital electronics to enhance the wearer's listening experience. Hearing aids are electronic instruments worn in or around the ear that compensate for hearing losses by specially amplifying sound. Hearing aids use transducer and electro-mechanical components which are connected via wires to the hearing aid circuitry.

Hearing assistance devices include the capability to receive audio from a variety of sources. For example, a hearing assistance device may receive audio or data from a transmitter or an assistive listening device (ALD). Data such as configuration parameters and telemetry information can be downloaded and/or uploaded to the instruments for the purpose of programming, control and data logging. Audio information can be digitized, packetized and transferred as digital packets to and from the hearing instruments for the purpose of streaming entertainment or other content.

Accordingly, there is a need in the art for improved systems and methods for obtaining an audio stream for hearing assistance devices.

### SUMMARY

Disclosed herein, among other things, are systems and methods for obtaining an audio stream for hearing assistance devices. One aspect of the present subject matter includes a method comprising sensing proximity of a wearer of a hearing assistance device, and sensing direction of movement of the wearer of the hearing assistance device. Audio streaming to the hearing assistance device is activated or deactivated based on the sensed proximity and direction of movement, according to various embodiments.

One aspect of the present subject matter includes a system comprising a hearing assistance device adapted to be worn by a wearer, and an external device. According to various embodiments, the external device is configured to sense proximity of the wearer, to sense direction of movement of the wearer, and to activate or deactivate audio streaming to the hearing assistance device from the external source based on the sensed proximity and direction of movement.

This Summary is an overview of some of the teachings of the present application and not intended to be an exclusive or exhaustive treatment of the present subject matter. Further details about the present subject matter are found in the detailed description and appended claims. The scope of the present invention is defined by the appended claims and their legal equivalents.

### BRIEF DESCRIPTION OF THE DRAWINGS

FIG. 1 illustrates a block diagram of a system including a hearing assistance device adapted to be worn by a wearer and an external device, according to various embodiments of the present subject matter.
FIG. 2 illustrates a flow diagram of a method for obtaining an audio stream for a hearing assistance device, according to various embodiments of the present subject matter.
FIG. 3 illustrates a system for obtaining an audio stream for a hearing assistance device, according to various embodiments of the present subject matter.

### DETAILED DESCRIPTION

The following detailed description of the present subject matter refers to subject matter in the accompanying drawings which show, by way of illustration, specific aspects and embodiments in which the present subject matter may be practiced. These embodiments are described in sufficient detail to enable those skilled in the art to practice the present subject matter. References to "an", "one", or "various" embodiments in this disclosure are not necessarily to the same embodiment, and such references contemplate more than one embodiment. The following detailed description is demonstrative and not to be taken in a limiting sense. The scope of the present subject matter is defined by the appended claims, along with the full scope of legal equivalents to which such claims are entitled.

The present detailed description will discuss hearing assistance devices using the example of hearing aids. Hearing aids are only one type of hearing assistance device. Other hearing assistance devices include, but are not limited to, those in this document. It is understood that their use in the description is intended to demonstrate the present subject matter, but not in a limited or exclusive or exhaustive sense.

Hearing assistance devices include the capability to receive audio from a variety of sources. For example, a hearing assistance device may receive audio or data from a transmitter or streamer from an external device, such as an assistive listening device (ALD). Data such as configuration parameters and telemetry information can be downloaded and/or uploaded to the instruments for the purpose of programming, control and data logging. Audio information can be digitized, packetized and transferred as digital packets to and from the hearing instruments for the purpose of streaming entertainment, carrying on phone conversations, playing announcements, alarms and reminders. In one embodiment, music is streamed from an external device to a hearing assistance device using a wireless transmission. Types of wireless transmissions include, but are not limited to, 802.11 (WIFI), Bluetooth or other means of wireless communication with a hearing instrument.

There is a need in the art for improved systems and methods for obtaining an audio stream for hearing assistance devices. Previous solutions included proprietary modes of operation to determine the frequency of operation of an assistive listening device, such as using magnetic inductive receivers to obtain information about the frequency of a narrowband FM signal.

Disclosed herein, among other things, are systems and methods for obtaining an audio stream for hearing assistance devices. One aspect of the present subject matter includes a method comprising sensing proximity of a wearer of a hearing assistance device, and sensing direction of movement of the wearer of the hearing assistance device. Audio streaming to the hearing assistance device is activated or deactivated based on the sensed proximity and direction of movement, according to various embodiments.

The present subject matter allows devices to receive a data stream when they are in close proximity of an audio field and when the direction of the person wearing the device is moving into or out of the audio field, according to various embodiments. In various embodiments, the host device can be a standard Bluetooth radio type device using adaptive frequency hopping techniques while allowing other uses to participate in receiving the information. The present subject matter allows a standard based approach and a single physical layer in the hearing instrument to receive a broadcast communication over a long range without having to transmit back to a host device, in various embodiments. In previous solutions, if the hearing instrument would need to communicate with the host device over a long range, it would need a large antenna and a much larger energy source than is typically available in a hearing instrument.

Various embodiments of the present subject matter involve a method of obtaining access to a streamed audio signal when entering an area where an audio signal is available from an assisted listening device (ALD) capable of wireless transmission. This method embodiment involves sensors that can determine whether a person equipped with hearing instruments capable of wireless communication is entering or leaving an area where an audio source is being transmitted wirelessly. This can be done using various means but may involve multiple sensors, multiple antennas, radar, sonar, infrared, radio frequency identification (RFID) tags or other means to determine whether a person is entering or leaving an area having a wireless source of audio. It is not sufficient to use only the proximity of a person to activate an inbound wireless audio stream, since a person may be entering or leaving an area of audio availability.

One example includes multiplex cinema where multiple audio sources may be available. A person/wearer of a hearing assistance device should not have the audio signal activated until that person enters the theater area and it should deactivate the audio when the person departs. Using the present subject matter the activation and deactivation is automatic based on proximity and arrival or departure.

According to various embodiments, proximity can be measured using sensing equipment such as infrared beams, RFID, radio frequency (RF) signal strength to or from a device, ultrasonic sonar, motion sensors, radar, and the like. In various embodiments, motion toward and motion away from an area can be measured using multiple sensors, RFID sensors, RF signal strength between two or more sensors or antennas, ultrasonic sonar measuring Doppler shift, radar measuring changes in motion and direction, motion sensors, and the like. The present subject matter does not limit the possibilities of sensing proximity toward or away from an audio source. Several examples are provided herein to accomplish this type of sensing, and other types of sensing can be used without departing from the scope of the present subject matter.

In one embodiment, the present subject matter uses the same physical layer within the hearing instrument for transmitting and receiving signals wirelessly, such as Bluetooth or Bluetooth low energy. The present subject matter utilizes the proximity sensor profile within Bluetooth low energy, in an embodiment. In addition to activating or deactivating automatic audio streaming when within or out of range, the same physical layer as Bluetooth low energy can be used with multiple sensors to also sense whether the direction of movement of the wearer of the hearing device is toward or away from the source (with sonar or Doppler, for example). In various embodiments, this can be used with a security key (digital rights management) to make the system more robust.

The present subject matter can uniquely identify when each person (or hearing assistance device wearer) passes through the audio threshold and then provide access to the audio stream from within the area. One such embodiment involves a short range (low level) RF signal being sent out from or to a sensor having an RF signal that will ask for or discover wireless nodes that are in proximity of the sensor. A received signal strength indication (RSSI) measurement of the received signal will be measured at both sensors or antennas, in various embodiments. If the signal at sensor 1 (nearest the exit) is first higher than that of sensor 2 (further from the exit and closer to the audio source) and then sometime later the opposite is true, it can be concluded that the person is entering (moving in the direction of the audio field) and the person wearing the hearing instrument capable of wireless communication should receive the audio signal from the source in an embodiment. If on the other hand at some point in time, sensor 2 perceives a higher signal than sensor 1 and sometime later (T2) sensor 1 has a higher perceived signal it can be concluded that the person is exiting the area of the audio field and the wireless signal should be deactivated, in an embodiment.

In another embodiment for sensing direction a single receiver can be used with a multi-antenna array such as in the case of pseudo-Doppler direction finding technique in which case the phase shift between elements of a circular antenna array is measured or an amplitude comparison of orthogonal elements can be made. These types of systems can be used for radio frequency direction finding. By taking measurements as the subject passes into or out of the audio field, access to the stream may be granted or denied based on the direction of movement. Still other methods of radio direction finding can be used without deviating from the present subject matter.

In various embodiments, when the sensor determines that a person has entered the audio field, it will allow the person to listen to the wireless signal by sending the device an address or other key information elements that allows the reception of the audio. Once the hearing instrument wearer receives the address or key, the hearing instrument wearer will have sufficient information to decode the signal. This key may contain all the information needed such as frequency hopping sequence, current channel, dispreading code, destination address, security code, etc and whatever means necessary to decode and receive the audio information, in various embodiments. In still other embodiments a private key may needed to be exchanged between the host device and the user.

Various embodiments for receiving the signal can be used without departing from the scope of the present subject matter. In one example, a device such as a smart phone can act as a gateway device for the hearing instruments. The smart phone could have an application on it that can receive a multicast or broadcast signal over a Wi-Fi or cellular network containing the audio signal, in an embodiment. In various embodiments, access to this stream is available to users based on location, proximity to an access point, or by means of the proximity sensors placed at the threshold of the entrance to the audio field. The audio stream can contain the audio associated with the audio field that is present in the auditorium, classroom, cinema, etc. This audio, once received by the gateway device, can then be streamed wirelessly via the cell phone to the hearing instrument wearer as a stereo or monaural signal using a protocol such as Bluetooth or other proprietary wireless means, according to various embodiments.

In another embodiment, the user selects the audio stream from a menu option within an application on a smart phone of possible audio streams available via a Wi-Fi multicast or broadcast signal or from a cellular RF network or low power FM broadcast.

Various embodiments include receiving a digital audio signal via direct access to the hearing instruments without the use of a cell phone or other device acting as a gateway (relay). In this embodiment the hearing instruments themselves will obtain the necessary frequency, cipher key, hopping sequence, de-spreading codes, secure address, etc. to obtain the audio stream over an RF link. The necessary information can come from the proximity sensor device as the hearing aid wearer passes a threshold and enters the audio field, in various embodiments.

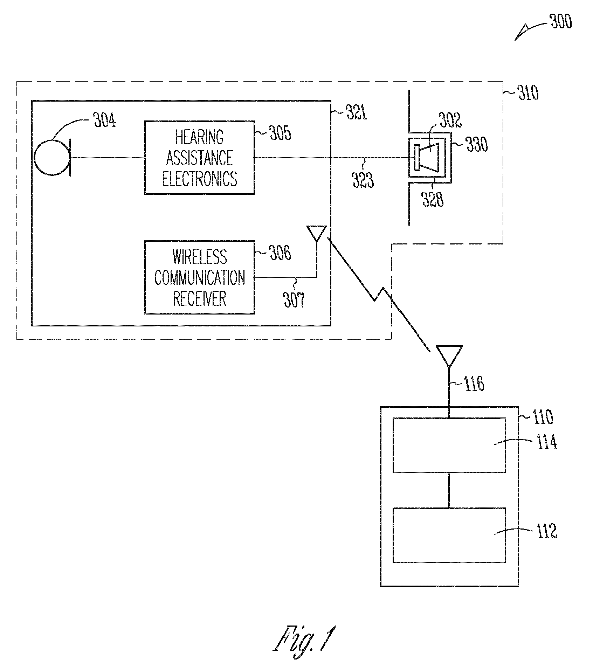

FIG. 1 illustrates a block diagram of a system 300, according to the present subject matter. The illustrated system 300 shows an external device 110 in wireless communication with a hearing assistance device 310. In various embodiments, the hearing assistance device 310 includes a first housing 321, an acoustic receiver or speaker 302, positioned in or about the ear canal 330 of a wearer and conductors 323 coupling the receiver 302 to the first housing 321 and the electronics enclosed therein. The electronics enclosed in the first housing 321 includes a microphone 304, hearing assistance electronics 305, a wireless communication receiver 306 and an antenna 307. In various embodiments, the hearing assistance electronics 305 includes at least one processor and memory components. The memory components store program instructions for the at least one processor. The program instructions include functions allowing the processor and other components to process audio received by the microphone 304 and transmit processed audio signals to the speaker 302. The speaker emits the processed audio signal as sound in the user's ear canal. In various embodiments, the hearing assistance electronics includes functionality to amplify, filter, limit, condition or a combination thereof, the sounds received using the microphone 304.

In the illustrated embodiment of FIG. 1, the wireless communications receiver 306 is connected to the hearing assistance electronics 305 and the conductors 323 connect the hearing assistance electronics 305 and the speaker 302. In various embodiments, the external device 110 includes a streaming audio device such as an ALD. The external device 110 includes an antenna 116 connected to processing electronics 114 that include a transmitter, in an embodiment. In various embodiments, the external device 110 includes one or more sensors 112 or sensing components connected to the processing electronics 114 to sense proximity and direction of the hearing assistance device 310.

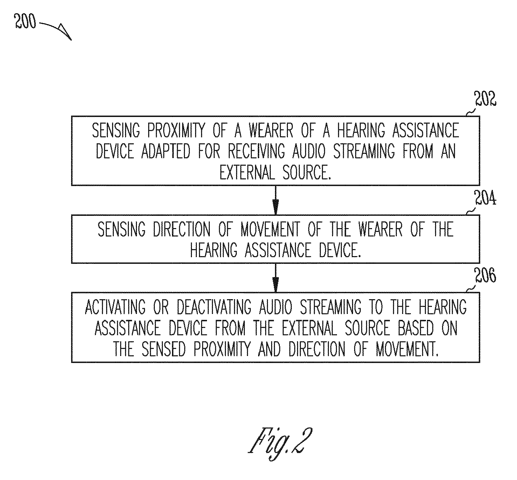

FIG. 2 illustrates a flow diagram of a method for obtaining an audio stream for a hearing assistance device, according to various embodiments of the present subject matter. One aspect of the present subject matter includes a method 200 comprising sensing proximity of a wearer of a hearing assistance device at 202, and sensing direction of movement of the wearer of the hearing assistance device at 204. Audio streaming to the hearing assistance device is activated or deactivated based on the sensed proximity and direction of movement at 206, according to various embodiments.

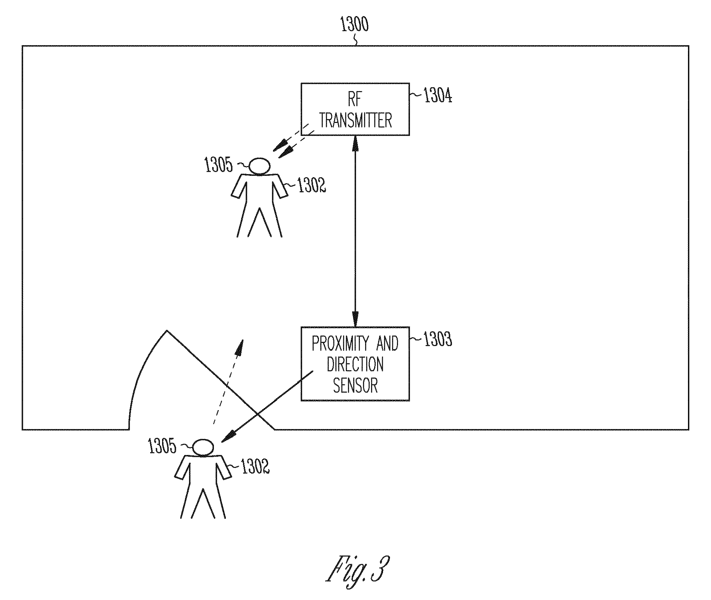

FIG. 3 illustrates a system for obtaining an audio stream for a hearing assistance device, according to various embodiments of the present subject matter. A hearing aid wearer 1302 is shown entering a room 1300 that contains an audio field of interest that is being wirelessly streamed from an RF transmitter 1304. Proximity and direction sensing device 1303 detects that the hearing aid wearer 1302 is entering the sound field, in an embodiment. The sensing device 1303 is also in a connection with RF transmitter 1304, since it has information it can send to the wearer 1302 that will allow the wearer to automatically receive the audio information being sent from the RF transmitter 1304, in various embodiments. The information includes all necessary information to acquire and play the stream. This information can include, but is not limited to, frequency, hop sequence, encryption keys, spreading codes, and access address. After the hearing assistance device 1305 worn by the wearer 1302 receives the appropriate information to acquire the stream, the wearer 1302 begins a connection with the RF transmitter 1304. If synchronization is lost with host transmitter 1304, the hearing assistance device 1304 can reacquire the stream from a dedicated channel or channels set aside to advertise from 1304 the data necessary for resynchronization with the audio stream, in various embodiments.

Various embodiments of the present subject matter support wireless communications with a hearing assistance device. In various embodiments the wireless communications can include standard or nonstandard communications. Some examples of standard wireless communications include link protocols including, but not limited to, Bluetooth™, IEEE 802.11(wireless LANs), 802.15 (WPANs), 802.16 (WiMAX), cellular protocols including, but not limited to CDMA and GSM, ZigBee, and ultra-wideband (UWB) technologies. Such protocols support radio frequency communications and some support infrared communications. Although the present system is demonstrated as a radio system, it is possible that other forms of wireless communications can be used such as ultrasonic, optical, and others. It is understood that the standards which can be used include past and present standards. It is also contemplated that future versions of these standards and new future standards may be employed without departing from the scope of the present subject matter.

The wireless communications support a connection from other devices. Such connections include, but are not limited to, one or more mono or stereo connections or digital connections having link protocols including, but not limited to 802.3 (Ethernet), 802.4, 802.5, USB, ATM, Fibre-channel, Firewire or 1394, InfiniBand, or a native streaming interface. In various embodiments, such connections include all past and present link protocols. It is also contemplated that future versions of these protocols and new future standards may be employed without departing from the scope of the present subject matter.

It is understood that variations in communications protocols, antenna configurations, and combinations of components may be employed without departing from the scope of the present subject matter. Hearing assistance devices typically include an enclosure or housing, a microphone, hearing assistance device electronics including processing electronics, and a speaker or receiver. It is understood that in various embodiments the microphone is optional. It is understood that in various embodiments the receiver is optional. Antenna configurations may vary and may be included within an enclosure for the electronics or be external to an enclosure for the electronics. Thus, the examples set forth herein are intended to be demonstrative and not a limiting or exhaustive depiction of variations.

It is further understood that any hearing assistance device may be used without departing from the scope and the devices depicted in the figures are intended to demonstrate the subject matter, but not in a limited, exhaustive, or exclusive sense. It is also understood that the present subject matter can be used with a device designed for use in the right ear or the left ear or both ears of the wearer.

It is understood that the hearing aids referenced in this patent application include a processor. The processor may be a digital signal processor (DSP), microprocessor, microcontroller, other digital logic, or combinations thereof. The processing of signals referenced in this application can be performed using the processor. Processing may be done in the digital domain, the analog domain, or combinations thereof. Processing may be done using subband processing techniques. Processing may be done with frequency domain or time domain approaches. Some processing may involve both frequency and time domain aspects. For brevity, in some examples drawings may omit certain blocks that perform frequency synthesis, frequency analysis, analog-to-digital conversion, digital-to-analog conversion, amplification, and certain types of filtering and processing. In various embodiments the processor is adapted to perform instructions stored in memory which may or may not be explicitly shown. Various types of memory may be used, including volatile and nonvolatile forms of memory. In various embodiments, instructions are performed by the processor to perform a number of signal processing tasks. In such embodiments, analog components are in communication with the processor to perform signal tasks, such as microphone reception, or receiver sound embodiments (i.e., in applications where such transducers are used). In various embodiments, different realizations of the block diagrams, circuits, and processes set forth herein may occur without departing from the scope of the present subject matter.

The present subject matter is demonstrated for hearing assistance devices, including hearing aids, including but not limited to, behind-the-ear (BTE), in-the-ear (ITE), in-the-canal (ITC), receiver-in-canal (RIC), or completely-in-the-canal (CIC) type hearing aids. It is understood that behind-the-ear type hearing aids may include devices that reside substantially behind the ear or over the ear. Such devices may include hearing aids with receivers associated with the electronics portion of the behind-the-ear device, or hearing aids of the type having receivers in the ear canal of the user, including but not limited to receiver-in-canal (RIC) or receiver-in-the-ear (RITE) designs. The present subject matter can also be used in hearing assistance devices generally, such as cochlear implant type hearing devices and such as deep insertion devices having a transducer, such as a receiver or microphone, whether custom fitted, standard, open fitted or occlusive fitted. It is understood that other hearing assistance devices not expressly stated herein may be used in conjunction with the present subject matter.

This application is intended to cover adaptations or variations of the present subject matter. It is to be understood that the above description is intended to be illustrative, and not restrictive. The scope of the present subject matter should be determined with reference to the appended claims, along with the full scope of legal equivalents to which such claims are entitled.

## Claims

1. A method, comprising:
sensing proximity of a wearer of a hearing assistance device adapted for receiving audio streaming from an external source;
sensing direction of movement of the wearer of the hearing assistance device; and
activating or deactivating audio streaming to the hearing assistance device from the external source based on the sensed proximity or sensed direction of movement.

2. The method of claim 1, wherein sensing proximity and sensing direction includes using multiple sensors.

3. The method of claim 1, wherein sensing proximity and sensing direction includes using multiple antennas.

4. The method of any of claim 1 through claim 3, wherein sensing proximity and sensing direction includes using a single receiver.

5. The method of any of claim 1 through claim 3, wherein sensing proximity and sensing direction includes using multiple receivers.

6. The method of claim 1, wherein sensing proximity and sensing direction includes using radar.

7. The method of claim 6, wherein sensing proximity and sensing direction includes using ultrasonic sonar.

8. The method of claim 1, wherein sensing proximity and sensing direction includes using infrared sensors.

9. The method of claim 1, wherein sensing proximity and sensing direction includes using radio frequency identification (RFID) sensors.

10. The method of claim 1, wherein sensing proximity and sensing direction includes using a proximity sensor profile within Bluetooth low energy.

11. The method of any of the preceding claims, wherein activating audio streaming to the hearing assistance device includes sending the device an address.

12. The method of any of claim 1 through claim 10, wherein activating audio streaming to the hearing assistance device includes sending the device a key.

13. A system, comprising:
a hearing assistance device adapted to be worn by a wearer; and
an external device, the external device configured to:
sense proximity of the wearer;
sense direction of movement of the wearer; and
activate or deactivate audio streaming to the hearing assistance device from the external source based on the sensed proximity or sensed direction of movement.

14. The system of claim 13, wherein the external device is an assistive listening device (ALD).

15. The system of claim 13 or claim 14, wherein the external device includes at least one radio frequency (RF) sensor.
